# EUROPEAN PATENT APPLICATION

(11) **EP 0 718 183 A1**
(43) Date of publication of application: **26.06.1996**
(21) Application number: 95120190.4
(22) Date of filing: 20.12.1995
(51) Int. Cl.: B62M 3/08, B62K 15/00

(54) **Foldable pedal, in particular for bicycles, motor bicycles and the like**

(30) Priority: 20.12.1994 IT FI940231
(71) Applicant: DI BLASI S.r.l., I-95049 Vizzini (Catania) (IT)
(72) Inventor: Di Blasi, Carmelo, I-96015 Francofonte (Siracusa) (IT); Di Blasi, Carlo Maria, I-96015 Francofonte (Siracusa) (IT)
(74) Representative: Gervasi, Gemma, Dr.

(57) **Abstract**

Foldable pedal (10), in particular for bicycles, motor biclycles and the like, consisting of a hub (11) able to rotate on bearings (16) supported by a shaft (13), fixed as usual to a crank (15), and of a foot stirrup (12) able to rotate on two pins (17) integral with the hub (11); the foot stirrup (12), in its turn, consisting of two longitudinal elements and of a cross element (19). The pedal (10) is characterized by the fact that, when the foot stirrup (12) is in use, its rotation on axis (18) is prevented in a first direction by the cross element (19), and in the other direction by a leaf (21) linked to the foot stirrup (12) by elastical means.

## Description

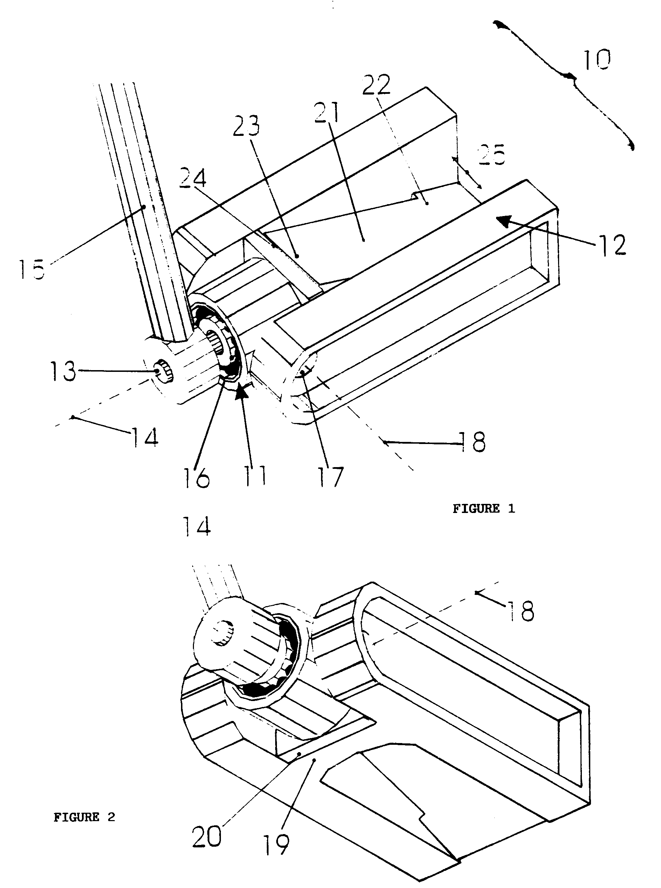

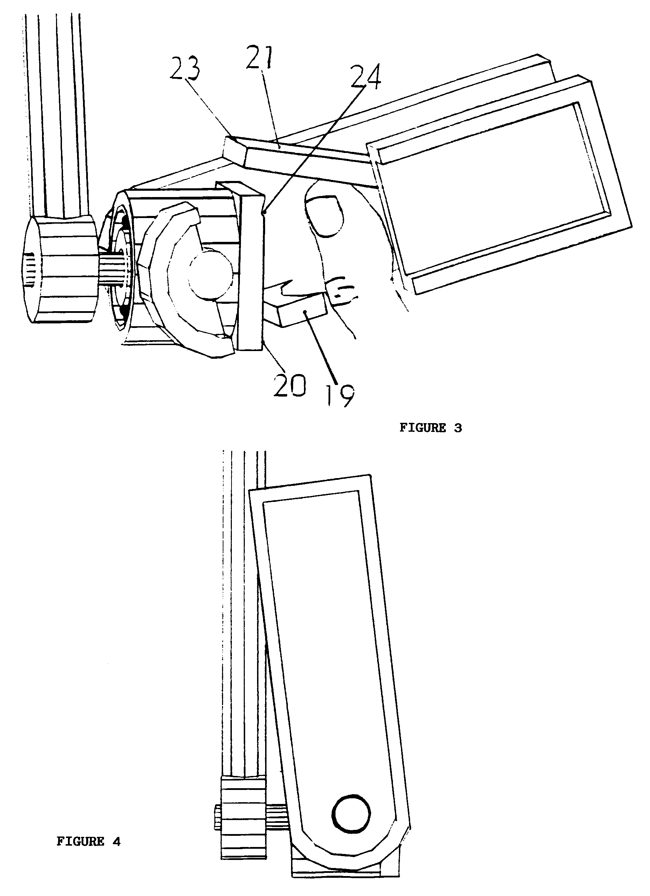

1. FIELD OF THE INVENTION
   Object of the present invention is a foldable pedal, in particular for bicycles, motor bicycles and the like, consisting of a hub able to rotate on bearings supported by a shaft, fixed as usual to a crank, and of a foot stirrup able to rotate on two pins integral with the hub. The particular shape of the pedal object of the present invention allows an easy folding of said pedal on the crank. This is particularly interesting during the transport of the foldable bicycle (or the motor bicycle) in a car trunk, because the pedals do not protrude from the bicycle frame and they do not rotate on the shaft.
2. PRIOR ART AND SUMMARY OF THE INVENTION
   It is well known that when bicycles or the motor bicycles are stored or trasported, their pedals troublesomely protrude from the general frame of the vehicle.
   Up to now some foldable pedals have been conceived, however all the proposed solutions show several deifferent drawbacks. In particular, no solution proposed in the past solves the problem of the blockage in use. Said blockage must be safe and must allow an easy opening and locking of the pedal.
   Object of the present invention is a foldable pedal for bicycles, motor bicycles and the like, which does not need any external blocking means and, when in use, remains stable and safe. Furthermore, the pedal object of the present invention is easy to fold and, when folded on the crank, it remains absolutely blocked.
   Object of the present invention is a foldable pedal, in particular for bicycles, motor biclycles and the like, consisting of a hub able to rotate on bearings supported by a shaft fixed as usual to a crank, and of a foot stirrup able to rotate on two pins integral with the hub; the foot stirrup, in its turn, consisting of two longitudinal elements and a cross element. The pedal is characterized by the fact that, when the foot stirrup is in use, its rotation on the axis common to the pins is prevented in a first direction by the cross element which is supported by the first end of the front wall of the hub, and in the other direction by a leaf linked to the foot stirrup by elastical means, said leaf having, in its turn, a side which is supported by the second end of the front wall of the hub.
3. LIST OF THE ALLEGED FIGURES
   The invention will be better understood referring to a particular non-limiting embodiment shown in the alleged figures, where:
   - figure 1 shows a top perspective view of the pedal object of the present invention in use , i.e. when the pedal is used to move the vehicle;
   - figure 2 shows a bottom perspective view of the pedal shown in figure 1;
   - figure 3 shows the folding of the pedal on the crank (some parts of the pedal have been removed for the sake of clarity);
   - figure 4 shows a perspective view of the pedal object of the present invention folded and blocked on the crank.
4. DETAILED DESCRIPTION OF THE INVENTION Referring now to the alleged figures, it is possible to notice that the pedal 10 object of the present invention essentially consists of a hub 11 and a foot stirrup 12. The shaft 13 is linked in a known manner to crank 15, whereas hub 11 can freely rotate on bearings 16 on axis 14 of the shaft 13. The foot stirrup 12 is pivotably mounted on two pins 17 (figure 1 shows only one pin) having the same axis 18, which is perpendicular to axis 14 of shaft 13. Said foot stirrup 12 essentially consists of two longitudinal elements which partially run along the external surface of hub 11 and of a cross element 19 (figures 2, 3). Thanks to this particular shape, the foot stirrup 12 can rotate with respect to hub 11 on axis 18 common to two pins 17, whereas, when said foot stirrup 12 is integral with hub 11 (in use), it is free to rotate only on axis 14 of the shaft 13.
   When the foot stirrup 12 is in use, i.e. when its longitudinal simmetry axis (not shown in figures) essentially coincides with axis 14, it cannot rotate on axis 18 of two pins 17. In this direction (in figures 1-4: clockwise direction) the rotation is prevented by the cross element 19 which, as already mentioned, runs between two longitudinal elements of the foot stirrup 12 and
   is integral with said elements. Thus, when the pedal 10 is in use (figures 1, 2), cross element 19 lies on the first end 20 of the front wall of the hub 11 (see also figure 3). In the other direction (in figures 1-4: counter-clockwise direction) the rotation on axis 18 is prevented by leaf 21, which is linked by elastical means to the foot stirrup 12 only in correspondence to the outer side 22, whereas the opposite side 23 lies on the second end 24 of the front wall of hub 11. In other words, when pedal 10 is in use, cross element 19 and side 23 of leaf 21 lie respectively on the ends 20, 24, said ends 20, 24 being symmetric with respect to axes 14, 18. As shown in the alleged figures 1-4, when the rotation of the foot stirrup 12 on axis 18 towards the two rotation directions is completely prevented, you can cycle by pushing the foot sole on the upper surfaces of the two longitudinal elements of the foot stirrup 12, or, after a suitable rotation of 180° on axis 14, by pushing the sole on the surfaces represented as the lower ones in figures 1-4.
   By a pushing action performed by a finger (figure 3), leaf 21 rotates on side 22, whereon an elastic hinge (not shown in the figures) can be provided, with a suitable angle sufficient to remove the side 23 of leaf 21 from the second end 24 (figure 3), thus allowing also the rotation of the foot stirrup 12 on axis 18 in a direction opposite to the one prevented by the cross element 19. Instead of providing a hinge in correspondence to side 22 of leaf 21, foot stirrup 12 and leaf 21 can be carried out all in a single piece, in particular made of plastics. In this latter case, leaf 21 must have a thickness which allows an easy deformation on side 22.
   Therefore, folding the pedal 10 in order to reduce the frame hindrance (figures 3, 4), side 23 of leaf 21 must rise from the second end 24, and the foot stirrup 12 must rotate of around 90° to crank 15. In order to avoid the rotation of the folded pedal 10 on axis 14 of shaft 13, a cavity 25 is provided on foot stirrup 12 (figure 1) wherein crank 15 engages. This fact is particularly interesting, for instance during the transport of the bicycle (or the motor bicycle) folded in the car trunk (figure 4), because the pedal does not protrude and does not rotate on axis 14.
   In order to use again the foot stirrup 12 (figures 1, 2), said stirrup 12 must rotate in the opposite direction on axis 18, until side 23 of leaf 21 lies again on the second end 24 whereon it is automatically blocked by its own elasticity or by elastical means.
   It should be understood that numerous modifications may be made in the specific form of the invention shown in the drawings and described above without deviating from the scope of the invention.

## Claims

1. A foldable pedal (10), in particular for bicycles, motor biclycles and the like, consisting of a hub (11) able to rotate on bearings (16) on a first axis (14) of a shaft (13) fixed as usual to a crank (15), and of a foot stirrup (12) able to rotate on a second axis (18) common to two pins (17) integral with said hub (11); said foot stirrup (12), in its turn, consisting of two longitudinal elements and a cross element (19); foldable pedal (10) characterized by the fact that when said foot stirrup (12) is in use, its rotation on said second axis (18), which perpendicularly intersects said first axis (14), is prevented in a first direction by said cross element (19) which is supported by the first end (20) of the front wall of the hub (11), and in the other direction by a leaf (21) linked to said foot stirrup (12) by elastical means, said leaf (21) having, in its turn, a side which is supported by the second end (24) of the front wall of said hub (11), said first (20) and second (24) ends being symmetrically opposed with respect to said two axes (14, 18) and the linkage between said leaf (21) and said foot stirrup (12) being carried out so that it allows an easy removal, by means of a suitable force applied on it, of said leaf (21) from said second end (24).

2. Foldable pedal (10) according to claim 1, wherein said leaf (21) and said foot stirrup (12) are all in a single piece of a certain material.

3. Foldable pedal (10) according to claim 2, wherein said material is plastics.

4. Foldable pedal (10) according to claim 1, wherein a cavity (25) is provided on said foot stirrup (12), said cavity (25) being able to engage said crank (15) in the locked position.
